# EUROPEAN PATENT APPLICATION

(11) **EP 4 517 118 A1**
(43) Date of publication of application: **05.03.2025**
(21) Application number: 23190764.3
(22) Date of filing: 10.08.2023
(51) Int. Cl.: F16C 17/03, B33Y 10/00, B23K 9/04, F16C 33/20

(54) **METHOD OF PRODUCING A SLIDING SURFACE OF A SLIDING BEARING BY ADDITIVE MANUFACTURING**

(71) Applicant: Siemens Gamesa Renewable Energy A/S, 7330 Brande (DK)
(72) Inventor: Jensen, Jens Bomholt, 8700 Horsens (DK)
(74) Representative: SGRE-Association

(57) **Abstract**

The present invention relates to a method of producing a sliding surface of a sliding bearing by an additive manufacturing process resulting in an additive manufacturing sliding surface. According to the invention, the method comprises the steps of providing a surface on which the additive manufacturing sliding surface material is to be printed, building up the additive manufacturing sliding surface by successively adding material, thereby creating a sliding surface layer, and cleaning the sliding surface layer from excess material.

## Description

The present invention relates to a method of producing a sliding surface of a sliding bearing by an additive manufacturing process resulting in an additive manufacturing sliding surface. The present invention further relates to a sliding bearing comprising a sliding surface is obtainable by said method.

Wind turbines are increasingly used for the generation of electrical energy. A wind turbine comprises a tower and a nacelle mounted on the tower, to which a hub is attached. A blade rotor is mounted at the hub and coupled to a generator. A plurality of blades extends from the blade rotor. The blades are oriented in such a way that wind passing over the blades turns the blade rotor, thereby driving the generator. Hence, the rotational energy of the blades is transferred to the generator rotor as part of the generator, which then converts the mechanical energy into electricity and transfers the electricity to the electrical grid.

To allow the rotational movement for driving the generator and to provide the necessary stability of the rotating parts, the generator and other parts of the drive train are mounted with at least one bearing. This bearing allows the drive train to rotate. At the same time it provides the necessary stability by supporting the radial and axial loads and the bending moments present in the drive train.

WO 2011/003482 A2 describes a wind turbine main bearing realized to bear a shaft of a wind turbine. The bearing comprises a sliding bearing with a plurality of bearing pads.

Sliding bearings known in the art typically comprise a bearing base body of a metallic material, to which is applied a sliding bearing layer either directly or indirectly via an intermediate layer. The sliding bearing layer, in particular the one of the bearing pads, is a sheet of extruded material hot pressed against a support structure that is prepared for mechanical and/or chemical bounding. Through this process, the fiber orientation of the sliding bearing layer, if a fiber material is used, depends on the extrusion process.

Although sliding bearings known in the art have good properties with regard to desired sliding properties and desired wear resistance, there is a need for further improving their properties.

However, there is either the problem that the sliding bearing layer does not provide the desired sliding bearing properties or the method for producing such a sliding bearing is too expensive.

The current development of the technology of wind turbines tends to an increased size of wind turbines for harvesting more wind energy, with longer blades and higher towers. As more energy is produced, the size and weight of the drive train components, i.e., the gearbox, the generator or the power electronics, and the components connected to the drive train components have increased in size as well. This increased size of wind turbine components results in the need to improve the bearing parts, as they have to be able to transfer the loads in the drive train. Hence, there is a need for the main bearing to adapt to the fast growth of the wind turbine.

It is thus an object for the invention to provide a new type of sliding bearing with improved properties and a method for the simple production of the sliding bearing.

This is achieved by a method of producing a sliding surface of a sliding bearing by an additive manufacturing process resulting in an additive manufacturing sliding surface according to claim 1 and by a sliding bearing comprising a sliding surface obtainable by said method according to claim 10.

According to the invention, a method of producing a sliding surface of a sliding bearing by an additive manufacturing process resulting in an additive manufacturing sliding surface comprises the steps of providing a surface on which the additive manufacturing sliding surface material is to be printed, building up the additive manufacturing sliding surface by successively adding material, thereby creating a sliding surface layer, and cleaning the sliding surface layer from excess material.

The sliding surface layer is thus produced by means of additive manufacturing, in particular by means of 3-D printing. This process gives unique properties to the sliding surface layer, not achievable through other manufacturing processes due to the accuracy of the printing techniques. The additive manufacturing or a 3-D printing or the construction in layers by a sintering method provides an optimum possibility of producing a suitable sliding surface since the production process is subject only to the peripheral conditions of the production of the additive manufacturing and in this way the sliding surface can be formed correspondingly complex. The accessibility of tools to the internal geometry no longer has any influence.

According to a preferred embodiment of the invention, the method further comprises the step of pressing the sliding surface layer to squeeze it. The pressing process compresses the structure of the printed layer, thus resulting in a more robust and stable sliding surface.

According to another preferred embodiment of the invention, the method further comprises the step of heating the sliding surface layer during the step of pressing the sliding surface layer.

The fiber orientation depends on the processing parameters of the 3D printing or the additive manufacturing process. Fiber orientation will be depending on processing parameters, where extrusion of the pattern will leave the fiber orientation aligned and squeezing the printed material to a flat surface will change the orientation. The squeezing will give the best wetting in between print lines. For optimizing the fiber orientation in the print process and for improving the mechanical strength of the printed material a following process is advantageous, where the printed material is heated below melted conditions and then pressed and hold together. In that process the printed material, in particular polymer chains, will move back and forth and start interacting with each other. By that the binding in between the patterns of printed material will go from a normal "wetting" technique known from gluing to a binding in between polymer chains, which is much stronger. This results in a mechanical connection between the fibers.

This process is particularly useful to repair and/or upgrade existing sliding surfaces, where additional material is needed. It can also be printed on site during service and maintenance tasks of sliding bearings.

According to another preferred embodiment of the invention, different materials are used for printing the sliding surface layer. By using different materials in one or more print heads each layer or print line can be varied in such a way that the sliding and structural properties of the sliding surface layer are optimized.

To achieve a good bond between the printed layer and the base structure, pretreatment of the base structure, such as the bearing shell or a support structure of the bearing shell, is advantageous.

According to another preferred embodiment of the invention, a first layer of printed material is printed in such a way that it results in a mechanical connection to the support structure of the bearing shell. For example, a pattern of dow tails are machined into the support structure.

According to another preferred embodiment of the invention, the step of creating a sliding surface layer is repeated to create a plurality of sliding surface layers arranged on top of each other.

According to another preferred embodiment of the invention, each sliding surface layer has a different orientation. This allows to optimize the support of the bearing shells and the rotational movement.

According to another preferred embodiment of the invention, the added material comprises polyether ether ketone fibers. This material is particularly suitable for sliding surfaces of sliding bearings.

According to another preferred embodiment of the invention, the additive manufacturing sliding surface comprises a printed pattern of printed pattern of bars, in particular substantially circular bars or hexagon bars. Round or circular bars provide a stable structure and makes it easy to print multiple layers on top of each other.

According to another preferred embodiment of the invention, the additive manufacturing sliding surface comprises a plurality of printed patterns of substantially circular bars arranged on top of each other, wherein each layer of printed patterns of substantially circular bars is rotated with respect to the neighboring layer by degrees.

According to another preferred embodiment of the invention, the additive manufacturing process is 3D printing.

By 3D printing the bearing material, e.g. polyether ether ketone fibers (PEEK), the fiber orientation usually depends on the pattern in which layers of 3D printed material are processed. The printing pattern can be any pattern which gives an optimal structural performance and can be two dimensional, tree dimensioal or even processed in a 5-axis process.

Yet another aspect of the invention relates to a sliding bearing for a wind turbine comprising a first bearing shell, a second bearing shell and a plurality of bearing pads arranged between first and the second bearing shell, wherein the bearing pads are connected to the second bearing shell and comprise a bearing pad sliding surface, wherein the first bearing shell comprises a first bearing shell sliding surface arranged so that the bearing pad sliding surface can slide along the bearing shell sliding surface when the bearing shells are moved in respect to each other, wherein the first bearing shell sliding surface and/or the bearing pad sliding surface is obtainable by the method of producing a sliding surface of a sliding bearing by an additive manufacturing process resulting in an additive manufacturing sliding surface.

According to a preferred embodiment of the invention, the additive manufacturing sliding surface is arranged on a support structure.

According to another preferred embodiment of the invention, the additive manufacturing sliding surface is coupled to the support structure by means of an adhesion layer.

According to another preferred embodiment of the invention, the adhesion layer comprises a chemically binding composition.

According to another preferred embodiment of the invention, the adhesion layer comprises a mechanically binding structure or fastening elements.

According to another preferred embodiment of the invention, the bearing pads are tilting pads tiltably mounted on the second bearing shell.

The tilting pads are tiltably arranged one after another along a circumferential direction at the bearing shell. The multiplicity of tilting pads is tiltably mounted on the bearing body and, with the other bearing shell, forms a lubricated bearing gap.

In order to facilitate the understanding of the characteristics of the invention and being an integral part of this specification, some drawing sheets are attached on which figures, with an illustrative but not limiting character, the following is represented:
Figure 1 shows a sliding bearing comprising a first bearing shell, a second bearing shell and a plurality of bearing pads.
Figures 2 to 5 show bearing pads comprising an additive manufacturing sliding surface in different configurations.

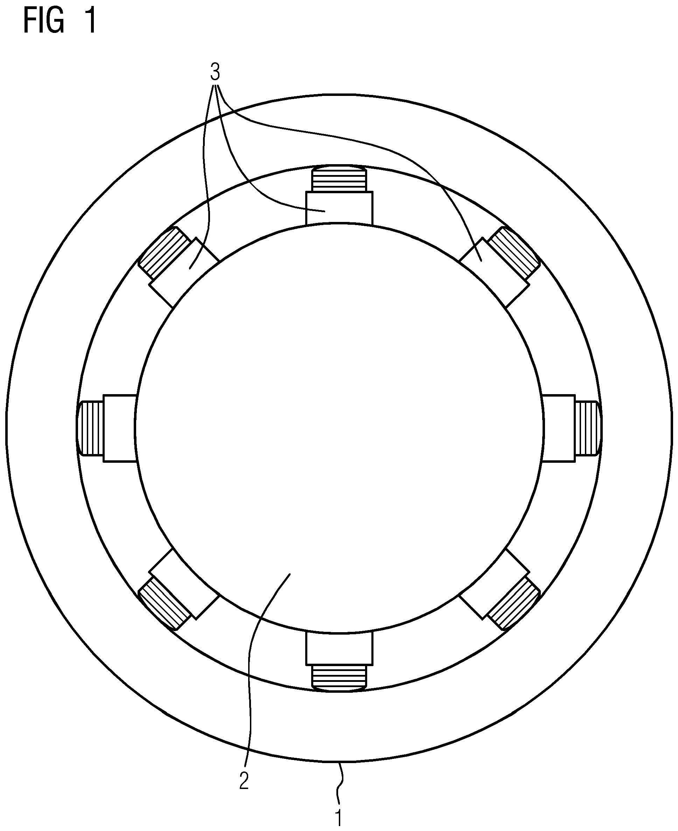

Figure 1 shows a sliding bearing comprising a first bearing shell 1, a second bearing shell 2 and a plurality of bearing pads 3 arranged between first and the second bearing shell 1, 2. The bearing pads 3 are connected to the second bearing shell 2 and comprise a bearing pad sliding surface 5, which is not visible in the Figure.

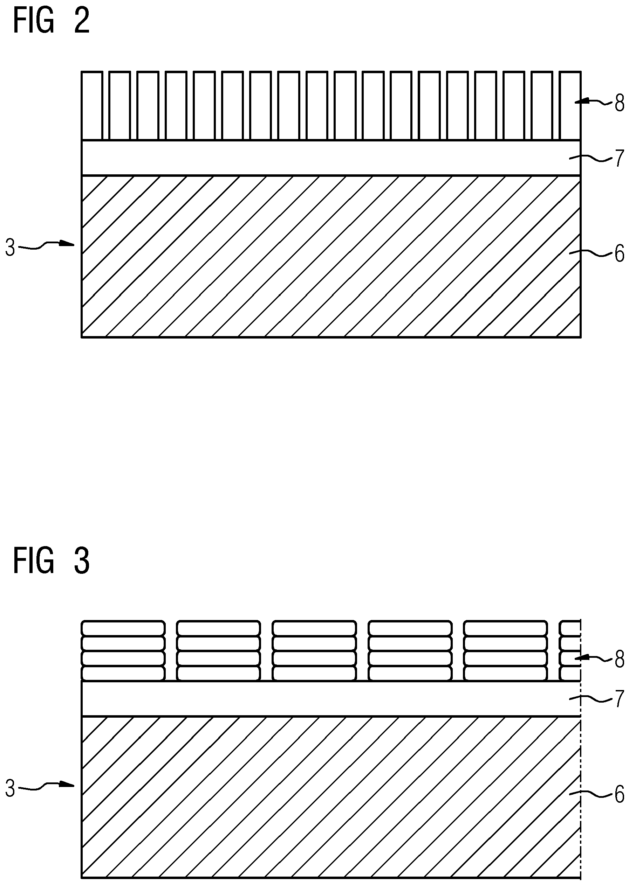

Figures 2 to 5 show bearing pads 3 comprising an additive manufacturing sliding surface 8 in different configurations. In all Figures, there is an adhesion layer 7 arranged between the additive manufacturing sliding surface 8 and a support structure 6 coupled to the second bearing shell 2.

In Figure 2, the additive manufacturing sliding surface 8 comprises a layer of single integral columns extending in radial direction of the sliding bearing. The columns are spaced apart to fill them with lubricant and/or allow lubricant to flow between the columns and improve the lubrication. The lubricant allows the debris of the manufacturing process to be removed.

In Figure 3, the additive manufacturing sliding surface 8 comprises a layer of single columns formed by a plurality of elliptic bars extending in radial direction of the sliding bearing. The columns are spaced apart to allow lubricant to flow between the columns and improve the lubrication. This type of columns can be produced by starting with the integral columns as shown in Figure 2 and pressing and/or heating the columns and subsequently adding a further layer of columns on top of the pressed columns, and repeating the process until a plurality of layers is achieved.

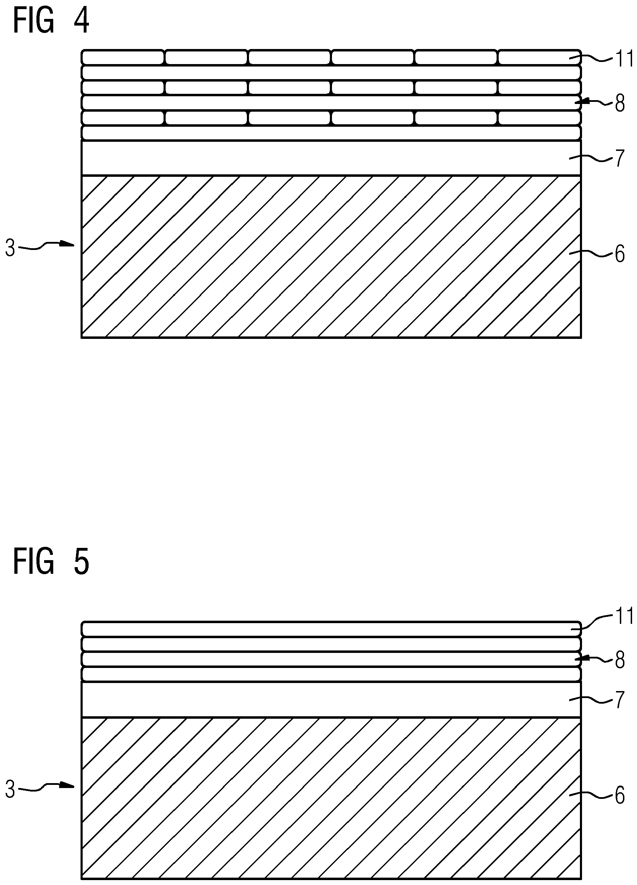

Figures 4 and 5 show a multilayer sliding surface 8 comprising a plurality of substantially circular bar layers 11 pressed together. In Figure 4, each layer of printed patterns of substantially circular bars 11 is rotated with respect to the neighboring layer by 90 degrees. In Figure 5, all substantially circular bars 11 have the same orientation.

### Reference numbers

- 1: First bearing shell
- 2: Second bearing shell
- 3: Bearing pads
- 4: First bearing shell sliding surface
- 5: Bearing pad sliding surface
- 6: Support structure
- 7: Adhesion layer
- 11: Circular bars

## Claims

1. A method of producing a sliding surface of a sliding bearing by an additive manufacturing process resulting in an additive manufacturing sliding surface, the method comprising the steps of:
providing a surface on which the additive manufacturing sliding surface material is to be printed,
building up the additive manufacturing sliding surface by successively adding material, thereby creating a sliding surface layer, and
cleaning the sliding surface layer from excess material.

2. The method according to claim 1, wherein the method further comprises the step of pressing the sliding surface layer to squeeze it.

3. The method according to claim 2, wherein the method further comprises the step of heating the sliding surface layer during the step of pressing the sliding surface layer.

4. The method according to any of the preceding claims, wherein the step of creating a sliding surface layer is repeated to create a plurality of sliding surface layers arranged on top of each other.

5. The method according to claim 4, wherein each sliding surface layer has a different orientation.

6. The method according to any of the preceding claims, wherein the added material comprises polyether ether ketone fibers.

7. The method according to any of the preceding claims, wherein the additive manufacturing sliding surface comprises a printed pattern of bars, in particular substantially circular bars (11) or hexagon bars.

8. The method according to claim 7, wherein the additive manufacturing sliding surface comprises a plurality of printed patterns of substantially circular bars (11) arranged on top of each other, wherein each layer of printed patterns of substantially circular bars (11) is rotated with respect to the neighboring layer by 90 degrees.

9. The method according to any of the preceding claims, wherein the additive manufacturing process is 3D printing.

10. Sliding bearing for a wind turbine comprising
- a first bearing shell (1), a second bearing shell (2) and a plurality of bearing pads (3) arranged between first and the second bearing shell (1, 2),
- wherein the bearing pads (3) are connected to the second bearing shell (2) and comprise a bearing pad sliding surface (5) ,
- wherein the first bearing shell (1) comprises a first bearing shell sliding surface (4) arranged so that the bearing pad sliding surface (5) can slide along the bearing shell sliding surface (4) when the bearing shells (1, 2) are moved in respect to each other,
- wherein the first bearing shell sliding surface (4) and/or the bearing pad sliding surface (5) is obtainable by the method of producing a sliding surface of a sliding bearing by an additive manufacturing process resulting in an additive manufacturing sliding surface (8) according to any of the claims 1 to 9.

11. Sliding bearing according to claim 10, wherein the additive manufacturing sliding surface is arranged on a support structure (6).

12. Sliding bearing according to claim 11, wherein the additive manufacturing sliding surface is coupled to the support structure (6) by means of an adhesion layer (7).

13. Sliding bearing according to claim 12, wherein the adhesion layer (7) comprises a chemically binding composition.

14. Sliding bearing according to claim 12, wherein the adhesion layer (7) comprises a mechanically binding structure or fastening elements.

15. Sliding bearing according to any of the preceding claims, wherein the bearing pads (3) are tilting pads tiltably mounted on the second bearing shell (2).
